**Europäisches Patentamt**

**European Patent Office**

**Office européen des brevets**

(11) Veröffentlichungsnummer: **0 165 510**
**B1**

(12) **EUROPÄISCHE PATENTSCHRIFT**

(45) Veröffentlichungstag der Patentschrift:
**22.06.88**

(51) Int. Cl.⁴: **C 03 B 37/018**

(21) Anmeldenummer: **85106569.8**

(22) Anmeldetag: **29.05.85**

(54) **Verfahren zur Herstellung von Lichtwellenleitern.**

(30) Priorität: **22.06.84 DE 3422997**

(43) Veröffentlichungstag der Anmeldung:
**27.12.85 Patentblatt 85/52**

(45) Bekanntmachung des Hinweises auf die Patenterteilung:
**22.06.88 Patentblatt 88/25**

(84) Benannte Vertragsstaaten:
**DE FR GB IT NL**

(56) Entgegenhaltungen:
**EP - A - 0 127 041**
**FR - A - 2 266 668**

(73) Patentinhaber: **Standard Elektrik Lorenz
Aktiengesellschaft, Lorenzstrasse 10,
D-7000 Stuttgart 40 (DE)**

(72) Erfinder: **Dorn, Reimund, Dr.,
Peter-von-Koblenz-Strasse 31, D-7141 Schwieberdingen
(DE)**
Erfinder: **Wittmann, Manfred, Dr., Drostestrasse 5,
D-7000 Stuttgart 31 (DE)**
Erfinder: **Zwick, Ulrich, Dr., Lindental 28 A,
D-7000 Stuttgart 31 (DE)**

(74) Vertreter: **Kugler, Hermann, Dipl.-Phys. et al, Standard
Elektrik Lorenz AG Patent- und Lizenzwesen
Postfach 30 09 29, D-7000 Stuttgart 30 (DE)**

**Beschreibung**

Die Erfindung betrifft ein Verfahren nach dem Oberbegriff des Patentanspruchs 1.

Ein solches Verfahren ist zum Beispiel bekannt aus der DE-B2-2 313 203 und aus der DE-B2-2 715 333.

Das aus der DE-B2-2 313 203 bekannte Verfahren ist das sogenannte «Aussenabscheideverfahren», das in der Fachliteratur vielfach beschrieben ist. Dabei wird partikelförmiges Glasausgangsmaterial, das in der Flamme eines Brenners erzeugt wird, auf der Aussenseite eines rotierenden zylindrischen Grundkörpers, auch Dorn genannt, abgeschieden. Nach Beendigung der Abscheidung einer Vielzahl von Schichten wird der Dorn entfernt, so dass eine poröse Vorform erhalten wird, die in ihrer Mitte ein Loch aufweist. Diese poröse Vorform kann auf verschiedene Arten zum Lichtwellenleiter weiterverarbeitet werden.

Das aus der DE-B2-2 715 333 bekannte Verfahren ist in der Literatur unter Bezeichnungen wie «Axialabscheideverfahren» oder «VAD-Verfahren» (VAD = Vapour Axial Deposition) vielfach beschrieben. Bei diesem Verfahren entsteht eine poröse Vorform dadurch, dass auf einem rotierenden Grundkörper in axialer Richtung partikelförmiges Glasausgangsmaterial abgeschieden wird, wobei das Material eine in radialer Richtung unterschiedliche Zusammensetzung hat.

Das «Aussenabscheideverfahren» hat den Nachteil, dass bei der Abscheidung Verunreinigungen vom Dorn in das darauf abgeschiedene Glasausgangsmaterial gelangen können, die als Fremdkörper im optisch aktiven Bereich des aus der Vorform hergestellten Lichtwellenleiters verbleiben und dessen optische Eigenschaften erheblich beeinträchtigen. Die Grenzfläche zwischen dem Dorn und dem darauf abgeschiedenen Material ist also eine für Verunreinigungen kritische Grenzfläche.

Das «Axialabscheideverfahren» hat den Nachteil, dass es wegen der gleichzeitigen Abscheidung des über den Querschnitt unterschiedlich zusammengesetzten Glasausgangsmaterials schwierig ist, ein vorgegebenes Brechungsindexprofil zu erreichen.

Die Erfindung betrifft in erster Linie den Verfahrensschritt der Herstellung der porösen Vorformen und hat zur Aufgabe, ein Verfahren der eingangs genannten Art anzugeben, das die geschilderten Nachteile der bekannten Verfahren vermeidet.

Die Aufgabe wird wie im Patentanspruch 1 angegeben gelöst. Weiterbildungen ergeben sich aus den Unteransprüchen.

Die erfindungsgemässe Lösung hat Berührungspunkte mit dem sogenannten «Innenabscheideverfahren», bekannt zum Beispiel aus der DE-C-2 463 097, insofern als Glasausgangsmaterial auf der Innenseite eines Rohres abgeschieden wird. Bei diesem Verfahren ergibt die Abscheidung jedoch keine poröse Vorform, weil

    a) das Rohr ein Quarzglasrohr ist und

    b) das abgeschiedene Material nach Beendigung der Abscheidung in glasigem Zustand vorliegt.

Auch bei derjenigen Verfahrensführung, bei der ein Rohr mit einer oder mehreren Schichten innenbeschichtet wird, insbesondere bekannt aus der DE-B-2 313 203, ergibt die Abscheidung keine durchgehend poröse Vorform. Hier wird entweder beim Abscheiden oder anschliessend das abgeschiedene Material gesintert so dass die abgeschiedenen Schichten im Ergebnis glasige Schichten sind. Vor dem Ausziehen kann das Rohr entfernt werden.

Gegenüber der an erster Stelle genannten Variante des «Innenabscheideverfahrens» hat die Erfindung den Vorteil, dass wegen der Abscheidung des Glasausgangsmaterials in poröser Form die Reaktions- und Abscheiderate beträchtlich erhöht wird. Gegenüber der an zweiter Stelle genannten Verfahrensvariante hat das erfindungsgemässe Verfahren den Vorteil, dass die Sinterung unproblematisch vonstatten geht, weil der zu sinternde Körper in einem durchgehend porösen Zustand vorliegt.

Die Erfindung wird nun anhand der Zeichnungen beispielsweise näher erläutert. Es zeigen:

Fig. 1 einen Teil einer Vorrichtung zur Durchführung des erfindungsgemässen Verfahrens, wenn ein Plasma verwendet wird und

Fig. 2 einen Teil einer Vorrichtung zur Durchführung des erfindungsgemässen Verfahrens, wenn ein Flammhydrolysebrenner verwendet wird.

Beiden Verfahrensvarianten gemäss den Figuren ist gemeinsam, dass eine poröse Vorform dadurch hergestellt wird, dass im Innenraum eines porösen Rohres aus Glasausgangsmaterial partikelförmiges Glasausgangsmaterial erzeugt und auf der Rohrinnenseite in poröser Form abgeschieden wird.

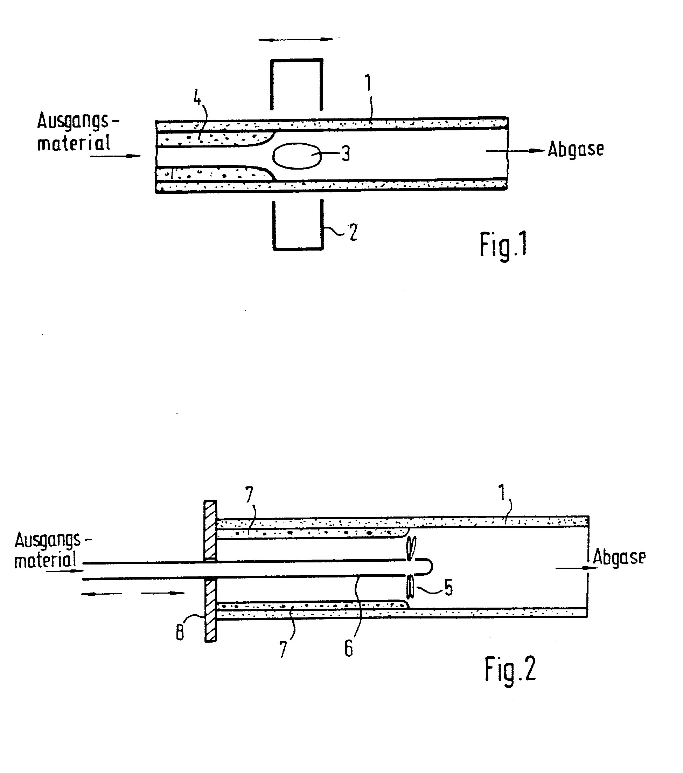

Fig. 1 zeigt ein poröses Rohr 1 aus Glasausgangsmaterial, entweder aus reinem Siliziumdioxid oder aus dotiertem Siliziumdioxid. Ein Mikrowellenresonator 2, der an der Aussenseite des porösen Rohres 1 hin und her bewegt wird, erzeugt im Innenraum des Rohres eine Plasmazone 3. In dieser Plasmazone 3 findet eine chemische Dampfphasenreaktion statt, bei der aus dampfförmigem Ausgangsmaterial, das in das eine Rohrende eingeleitet wird, partikelförmiges Glasausgangsmaterial erzeugt wird, das sich in poröser Form in der Rohrinnenwand abscheidet. Das abgeschiedene poröse Material ist in Fig. 1 mit 4 bezeichnet. Die Ausgangsmaterialien und die Anordnung zur Durchführung des Verfahrens nach Fig. 1 sind im wesentlichen die gleichen wie beim bekannten «Plasma-Innenabscheideverfahren», wie es beispielsweise in «Journal of Non-Crystaline Solids, Glass 1977, Vol. II, Proceedings of the XI. International Congress of Glass, Prague, Czechoslovakia, July 4 bis 8, 1977» im Zusammenhang mit Fig. 8 auf Seite 182 beschrieben ist. Eine nähere Erläuterung ist daher entbehrlich. Wesentlich beim erfindungsgemässen Verfahren gegenüber dem bekannten «Plasma-Innenabscheideverfahren» ist eine solche Reaktionsführung, dass die Abscheidung in poröser Form erfolgt, dass also die Bildung von glasigen Schichten vermieden wird.

Weil im Gegensatz zum bekannten Verfahren keine glasige Abscheidung, sondern eine poröse Abscheidung erwünscht ist, kann bei einem geringeren Unterdruck gearbeitet werden als beim bekannten Verfahren, nämlich ungefähr bei 300 mbar. Infolgedessen kann der Durchsatz an dampfförmigen Ausgangsstoffen durch das Rohr erhöht und damit eine grössere Abscheiderate gegenüber dem bekannten «Plasma-Innenabscheideverfahren» erzielt werden.

Gegenüber einem «Plasma-Innenabscheideverfahren», bei dem die Abscheidung zwar in partikelförmigem Zustand erfolgt, jedoch im weiteren Durchgang der Plasmazone glasig erschmolzen wird, hat das vorstehend beschriebene Verfahren den Vorteil, dass die eingekoppelte Energie besser ausgenutzt wird, weil kein Anteil für das Verglasen der partikelförmigen Abscheidung verwendet wird.

Infolge des porösen Rohres beim erfindungsgemässen Verfahren ist eine besondere Massnahme erforderlich, um den Unterdruck, der für das Plasma notwendig ist, innerhalb des Rohres aufrecht zu erhalten. Hierzu wird die Aussenseite des porösen Rohres gegenüber der Umgebung abgedichtet, beispielsweise durch einen auf die Rohraussenwand aufgezogenen luftdichten Schlauch, der nach Beendigung des Abscheidevorgangs wieder entfernt wird. Statt eines Schlauchs kann auch ein für Mikrowellen durchlässiges Rohr über das poröse Rohr geschoben werden und mittels Ringdichtungen an den beiden Enden des porösen Rohres auf diesem befestigt werden.

Die Weiterverarbeitung der auf die beschriebene Weise erhaltenen porösen Vorform zum Lichtwellenleiter bedarf keiner Erläuterung, da sie wie bei bekannten Verfahren, die eine poröse Vorform verwenden, erfolgt und nicht Gegenstand der Erfindung ist.

Fig. 2 zeigt eine Verfahrensführung, bei der das partikelförmige Glasausgangsmaterial in der Flamme eines Flammhydrolysebrenners 6 erzeugt und aus der Flamme auf der Innenwand des porösen Rohres 1 abgeschieden wird. Das abgeschiedene poröse Material ist mit 7 bezeichnet. Der Flammhydrolysebrenner 6 ragt in das poröse Rohr 1 von aussen hinein und wird in dessen Innenraum relativ zum porösen Rohr 1 entlang dessen Längsachse bewegt, damit die Abscheidung auf der gesamten Länge des Rohres stattfindet. In den Flammhydrolysebrenner wird das der gewünschten Materialzusammensetzung entsprechende dampfförmige Ausgangsmaterial des zu erzeugenden partikelförmigen Glasausgangsmaterials zusammen mit den Brenngasen in der üblichen Weise eingeleitet. Damit während der Abscheidung keine unerwünschten Verunreinigungen eindringen können, ist dasjenige Rohrende, an dem der Flammhydrolysebrenner 6 in das Rohr hineinragt, mit einem Deckel 8 verschlossen. Der Deckel 8 weist eine dichte Durchführung in seiner Mitte auf, durch die der Brenner 6 in das Rohr hineinragt. Am anderen, nicht verschlossenen Ende verlassen die bei der Flammhydrolyse entstehenden Abgase das poröse Rohr 1.

Um einen hohen Wirkungsgrad bei der Abscheidung zu erzielen, ist die Brennerdüse so ausgebildet, dass die Flamme eine Vorzugsrichtung in radialer Richtung auf die Rohrinnenwand zu erhält oder sogar genau in radialer Richtung brennt. Die Abscheidung erfolgt in einer Vielzahl von Durchgängen und entsprechend mit einer Vielzahl von Schichten. Dabei ist darauf zu achten, dass das abgeschiedene Glasausgangsmaterial zwar bei der Abscheidung selbst so weit angesintert wird, dass die Partikel zusammenhängen, dass jedoch das Material noch nicht glasig erschmolzen wird, sondern noch porös bleibt. Entsprechend diesem Erfordernis ist die Flammengrösse und Temperatur zu regeln.

Damit die Rotationssymmetrie des abgeschiedenen Materials nicht durch den Einfluss der Schwerkraft beeinträchtigt wird, lässt man während der Abscheidung das Rohr um seine Längsachse rotieren, oder man ordnet es in vertikaler Richtung an. In jedem Fall wird der Brenner relativ zum Rohr in dessen Längsrichtung verschoben, wobei es nur eine Frage des apparativen Aufwandes ist, ob das Rohr in Längsrichtung festgehalten und der Brenner verschoben wird oder umgekehrt.

Gegenüber den eingangs genannten, bekannten Verfahren hat die anhand der Fig. 2 beschriebene Variante des erfindungsgemässen Verfahrens die folgenden Vorteile:

Gegenüber dem «Innenabscheideverfahren» mit Energieeinkopplung von aussen durch einen Ringbrenner: Dadurch, dass das poröse Rohr bei der Abscheidung nicht erhitzt wird, besteht zwischen dem Ort, an dem das partikelförmige Glasausgangsmaterial erzeugt wird, und dem Ort der Abscheidung (Rohrinnenwand) ein grosser Temperaturgradient, der bekanntlich den Wirkungsgrad der Abscheidung begünstigt. Da weder während, noch unmittelbar an die Abscheidung anschliessend das abgeschiedene Material verglast werden soll, kann die Flammentemperatur, der Durchsatz der Ausgangsmaterialien durch die Flamme sowie die Geschwindigkeit der Relativbewegung zwischen Flamme und Rohr ausschliesslich im Hinblick auf eine hohe Abscheidungsrate optimiert werden. Abgesehen davon ist die Energieausnutzung verbessert, da die Flamme unmittelbar an dem Ort wirkt, an dem die Reaktionsenergie zur Verfügung stehen soll.

Gegenüber einem «Innenabscheideverfahren», von aussen angeregt durch eine plasmaerzeugende Vorrichtung: Da auf eine Verglasung keine Rücksicht genommen zu werden braucht, weder während der Abscheidung selbst, noch unmittelbar im Anschluss daran, kann die Abscheiderate erhöht werden.

Die Vorteile gegenüber dem «Aussenabscheideverfahren» und dem «Axialabscheideverfahren» ergeben sich aus der Einleitung der Beschreibung und der Aufgabenstellung.

Dieselben Vorteile hat auch ein solches Verfahren, bei dem statt eines porösen Rohres aus Glasausgangsmaterial ein Rohr aus irgend einem anderen Material verwendet wird, sofern dieses Rohr folgende Eigenschaften hat: Bei Verwendung eines Flammhydrolysebrenners muss es hitzebeständig sein, bei Verwendung einer plasmaerzeugenden Vorrichtung muss es mikrowellendurchlässig sein. In jedem Falle muss es nach Beendigung der Abscheidung leicht von der durch die Abscheidung entstandenen porösen Vorform aus Glasausgangsmaterial entfernbar sein, damit diese zum Lichtwellenleiter weiterverarbeitet werden kann.

Abschliessend werden noch zwei Möglichkeiten der Herstellung des porösen Rohres aus Glasausgangsmaterial angegeben.

Pulverförmiges Glasausgangsmaterial wird in einer Pressform zu einem pulverförmigen porösen Körper verpresst, z.B. nach dem in der älteren europäischen Anmeldung EP-A2-0 153 619, veröffentlicht am 4. 9. 85 und daher fallend unter Artikel 54 (3) EPÜ, beschriebenen Verfahren.

Alternativ hierzu wird pulverförmiges Glasausgangsmaterial auf der Aussenfläche eines zylindrischen Grundkörpers abgeschieden und dieser anschliessend entfernt, so dass das poröse Rohr entsteht.

## Patentansprüche

1. Verfahren zum Herstellen von Lichtwellenleitern, bei dem eine poröse Vorform hergestellt und zum Lichtwellenleiter weiterverarbeitet wird, dadurch gekennzeichnet, dass zum Herstellen der porösen Vorform im Innenraum eines porösen Rohres (1) aus Glasausgangsmaterial oder eines Rohres aus irgend einem anderen Material partikelförmiges Glasausgangsmaterial erzeugt und auf der Rohrinnenseite in poröser Form abgeschieden wird, wobei, wenn ein Rohr aus irgend einem anderen Material verwendet wird, dieses Rohr nach Beendigung der Abscheidung von der durch die Abscheidung entstandenen porösen Vorform aus Glasausgangsmaterial entfernt wird.

2. Verfahren nach Anspruch 1, dadurch gekennzeichnet, dass zum Erzeugen des partikelförmigen Glasausgangsmaterials im porösen Rohr (1) eine chemische Dampfphasenreaktion durchgeführt wird, die durch eine an der Aussenseite des porösen Rohres befindliche und relativ zum Rohr entlang dessen Längsachse bewegte plasmaerzeugende Vorrichtung (2) angeregt wird (Fig. 1).

3. Verfahren nach Anspruch 1, dadurch gekennzeichnet, dass zum Erzeugen des partikelförmigen Glasausgangsmaterials ein Flammhydrolysebrenner (6) verwendet wird, der sich im Rohr (1) befindet und relativ zum Rohr entlang dessen Längsachse bewegt wird.

4. Verfahren nach Anspruch 2, dadurch gekennzeichnet, dass während der Abscheidung im porösen Rohr (1) ein Unterdruck aufrechterhalten wird, wobei das poröse Rohr (1) an seiner Aussenseite gegen den atmosphärischen Druck abgedichtet wird.

5. Verfahren nach Anspruch 4, dadurch gekennzeichnet, dass das poröse Rohr (1) zum Abdichten mit einem luftdichten Schlauch überzogen wird, der nach Beendigung der Abscheidung entfernt wird.

6. Verfahren nach einem der vorstehenden Ansprüche, dadurch gekennzeichnet, dass das poröse Rohr aus Glasausgangsmaterial durch Pressen von pulverförmigem Glasausgangsmaterial in einer Pressform hergestellt wird.

7. Verfahren nach einem der Ansprüche 1 bis 5, dadurch gekennzeichnet, dass das poröse Rohr aus Glasausgangsmaterial durch Abscheiden von pulverförmigem Glasausgangsmaterial auf der Aussenfläche eines zylindrischen Grundkörpers und anschliessendes Entfernen desselben hergestellt wird.

## Claims

1. Method of making optical waveguides in which a porous preform is fabricated and processed into the optical waveguide, characterized in that for fabricating the porous preform, particulate glass starting material is produced in the interior space of a porous tube (1) of glass starting material or a tube of any other material and deposited in porous form on the inside of the tube, and that, if a tube of any other material is used, said tube is removed from the porous preform after completion of the deposition.

2. A method as claimed in claim 1, characterized in that for producing the particulate glass starting material, a chemical vapor phase reaction is carried out inside the porous tube (1), the reaction being stimulated by a plasma-producing device (2) positioned on the outside of the porous tube and moved relative to the tube along the longitudinal axis thereof.

3. A method as claimed in claim 1, characterized in that for producing the particulate glass starting material, a flame hydrolysis burner (6) is used which is positioned inside the tube (1) and is moved relative to the tube along the longitudinal axis thereof.

4. A method as claimed in claim 2, characterized in that during the deposition inside the porous tube (1), there is maintained a pressure below the atmospheric, with the porous tube (1) being sealed on its outside against the atmospheric pressure.

5. A method as claimed in claim 4, characterized in that for sealing the porous tube (1), the latter is provided with an airtight hose which is removed after completion of the deposition.

6. A method as claimed in any one of the preceding claims, characterized in that the porous tube of glass starting material is fabricated by pressing powdery glass starting material in a compression mold.

7. A method as claimed in any one of claims 1 to 5, characterized in that the porous tube of glass starting material is fabricated by depositing powdery glass starting material on the outer surface of a cylindrical base body and subsequently removing the same.

## Revendications

1. Procédé de fabrication de guide d'onde optique dans lequel une préforme poreuse est fabriquée et ensuite convertie en un guide d'onde optique, caractérisé en ce que, pour fabriquer la préforme poreuse, un matériau vitreux de départ en particules est produit dans l'espace intérieur d'un tube poreux (1) en matériau vitreux de départ ou d'un tube en un quelconque autre matériau et est déposé sous forme poreuse sur la paroi intérieure du tube, ce tube, étant enlevé, lorsque l'on emploie un tube en un quelconque autre matériau, après la fin du dépôt de la préforme poreuse en matériau vitreux de départ obtenue par ce dépôt.

2. Procédé conforme à la revendication 1, caractérisé en ce que, pour produire le matériau vitreux de départ en particules dans le tube poreux (1), une réaction chimique en phase vapeur est développée, laquelle est stimulée par un dispositif de production de plasma (2) disposé à l'extérieur du tube poreux et déplacé par rapport au tube, selon l'axe longitudinal de celui-ci (fig. 1).

3. Procédé conforme à la revendication 1, caractérisé en ce que, pour produire le matériau vitreux de départ en particules, on utilise un brûleur d'hydrolyse à la flamme (6) qui est disposé dans le tube (1) et déplacé par rapport au tube selon l'axe longitudinal de celui-ci.

4. Procédé conforme à la revendication 2, caractérisé en ce que, durant le dépôt à l'intérieur du tube poreux (1), on maintient une pression inférieure à la pression atmosphérique, le tube poreux (1) étant extérieurement scellé vis-à-vis de la pression atmosphérique.

5. Procédé conforme à la revendication 4, caractérisé en ce que le tube poreux (1), pour être scellé, est revêtu d'un tube étanche qui est enlevé après la fin du dépôt.

6. Procédé conforme à l'une des revendications précédentes, caractérisé en ce que le tube poreux en matériau vitreux de départ est fabriqué par pressage d'un matériau vitreux de départ en poudre de verre dans un moule de compression.

7. Procédé conforme à l'une des revendications 1 à 5, caractérisé en ce que le tube poreux en matériau vitreux de départ est fabriqué par dépôt de matériau vitreux de départ en poudre de verre sur la surface extérieure d'un corps cylindrique de base, puis l'enlèvement ultérieur de ce dernier.

Fig.1

Fig.2